Europäisches Patentamt

European Patent Office

Office européen des brevets

(19)

(11) Numéro de publication: **0 399 575**
**A1**

(12) **DEMANDE DE BREVET EUROPEEN**

(21) Numéro de dépôt: **90200479.5**

(22) Date de dépôt: **01.03.90**

(51) Int. Cl.5: **H04N 11/08**

Le titre de l'invention a été modifié (Directives relatives à l'examen pratiqué à l'OEB, A-III, 7.3)

(30) Priorité: **07.03.89 FR 8902971**

(43) Date de publication de la demande:
**28.11.90 Bulletin 90/48**

(84) Etats contractants désignés:
**DE FR GB IT SE**

(71) Demandeur: **LA RADIOTECHNIQUE PORTENSEIGNE**
**51, Rue Carnot**
**F-92159 Suresnes(FR)**
(84) **FR**

Demandeur: **N.V. Philips' Gloeilampenfabrieken**
**Groenewoudseweg 1**
**NL-5621 BA Eindhoven(NL)**
(84) **DE GB IT SE**

(72) Inventeur: **Hajj Chehade, Mohammad, Société Civile S.P.I.D.**
**209 rue de l'Université**
**F-75007 Paris(FR)**

(74) Mandataire: **Caron, Jean et al**
**Société Civile S.P.I.D. 156, Boulevard Haussmann**
**F-75008 Paris(FR)**

(54) **Base de temps et dispositif d'alignement de signal pour la réception de télévision à synchronisation numérique.**

(57) Dans la base de temps selon l'invention, le système de détection numérique du mot de synchronisation de trame 5 est muni de moyens pour reconnaître un mot de synchronisation de trame sur deux.

Ce système est basé sur la reconnaissance d'une partie seulement du mot de synchronisation de trame, partie qui peut être limitée à un champ dont la longueur est comprise entre seize et vingt-quatre bits seulement.

Le dispositif d'alignement est muni d'un circuit de comptage 9 qui est remis à zéro toutes les deux lignes par les éléments 12,8,7, et aussi via les éléments 6,7 lors de la détection d'un mot de trame, et fournit des signaux de positionnement temporel calés de façon adaptée par rapport au début d'une ligne, qui sont amenés à un circuit générateur d'impulsion 10 pour y déclencher une impulsion destinée à l'échantillonnage d'une tension de référence pour le réglage de la composante continue.

L'invention s'applique notamment aux têtes de réseaux cablés.

FIG. 2

# BASE DE TEMPS ET DISPOSITIF D'ALIGNEMENT SIMPLIFIES POUR LA RECEPTION DE TELEVISION A SYNCHRONISATION NUMERIQUE

La présente invention concerne une base de temps pour un système de télévision faisant usage d'un mot de synchronisation de trame numérique, des mots de synchronisation de trame différents étant utilisés pour les trames paires et pour les trames impaires, base de temps munie d'un dispositif de détection numérique du mot de synchronisation de trame.

L'invention s'applique entre autres, par exemple dans un système au standard D2-MAC/paquet, aux têtes de réseaux cablés dans lesquelles on désire transformer la modulation de fréquence du signal reçu à l'antenne en un signal modulé en amplitude destiné à la transmission sur le cable, et ceci sans procéder au décodage complet du signal reçu.

Selon la norme D2-MAC/paquet par exemple, il y a deux signaux de synchronisation de trame inverses l'un de l'autre qui sont utilisés tour à tour, une trame sur deux. Il y a aussi deux signaux de synchronisation de ligne différents qui sont utilisés tour à tour, une ligne sur deux. Il est connu de se baser sur l'alternance de ces signaux pour reconnaitre la fin d'une trame ou pour distinguer les lignes entre elles. Par exemple le document EP-A-0 200 269 décrit un procédé et un dispositif qui se basent sur une occurence déterminée de signaux de lignes différents d'une ligne à la suivante, pour détecter une fin de trame.

L'invention est basée sur l'idée qu'au lieu de chercher à reconnaitre tous les mots consécutifs malgré leur différence, on peut se contenter de chercher un mot sur deux, grâce à quoi tous les mots à reconnaitre sont les mêmes.

Ainsi, une base de temps selon l'invention est particulièrement remarquable en ce que le système de détection numérique est muni de moyens pour reconnaître un mot de synchronisation de trame sur deux.

En outre, pour simplifier encore, on peut se contenter de rechercher une partie de mot seulement. Ainsi, les moyens pour reconnaître un mot de synchronisation de trame sont avantageusement basés sur la reconnaissance d'une partie seulement du mot de synchronisation de trame, partie qui peut être limitée à un champ dont la longueur est comprise entre seize et vingt-quatre bits seulement.

En continuant à exploiter l'idée de s'intéresser seulement à un mot sur deux afin qu'ils soient tous identiques, un dispositif d'alignement associé à la base de temps est muni d'un circuit de comptage qui est remis à zéro en relation avec la détection d'un mot de trame et fournit des signaux de positionnement temporel calés de façon adaptée par rapport au début d'une ligne, qui sont amenés à un circuit générateur d'impulsion pour y déclencher une impulsion de durée déterminée destinée à l'échantillonnage d'une tension de référence pour le réglage de la composante continue, et ce circuit de comptage est agencé pour fournir un signal toutes les deux lignes d'image.

Afin d'obtenir lesdits signaux d'échantillonnage de la façon la plus simple possible, un circuit de retardement est avantageusement inséré entre le système de détection numérique et le circuit de comptage. Ainsi le circuit de comptage peut être remis à zéro à l'instant qui correspond au début de la période d'échantillonnage désirée.

Dans un mode de réalisation particulièrement simple, le mot recherché est le mot C246 (exprimé en notation hexadécimale) dans un champ de seize bits, ou bien le mot 41C246 dans un champ de vingt-quatre bits, et le susdit circuit générateur d'impulsion est agencé pour fournir une impulsion dont la longueur correspond à un nombre de périodes d'horloge compris entre trois et sept, le retardement étant alors de quatre à huit périodes d'horloge.

Dans une variante, ledit circuit générateur d'impulsion est agencé pour fournir une impulsion dont la longueur correspond à un nombre de périodes d'horloge de l'ordre d'une centaine, et inférieur à cent cinq. Alors des moyens sont prévus pour détecter un chiffre de comptage particulier du circuit de comptage, et fournir alors le susdit signal de positionnement temporel.

Un dispositif d'alignement selon cette dernière variante est en outre avantageusement muni d'un dispositif d'échantillonnage qui est un circuit de détection de la valeur minimale du signal, et de moyens pour activer ce dispositif par la susdite impulsion destinée à l'échantillonnage, lorsqu'un mot de synchronisation de trame a été détecté depuis un temps prédéterminé, et pour l'activer constamment dans le cas contraire.

La description qui va suivre, en regard des dessins annexés décrivant des exemples non limitatifs fera bien comprendre comment l'invention peut être réalisée.

La figure 1 est un schéma montrant où est placée la base de temps selon l'invention dans un système.

La figure 2 représente schématiquement un mode de réalisation de l'invention.

La figure 3 montre des formes d'onde rencontrées à l'entrée de la base de temps.

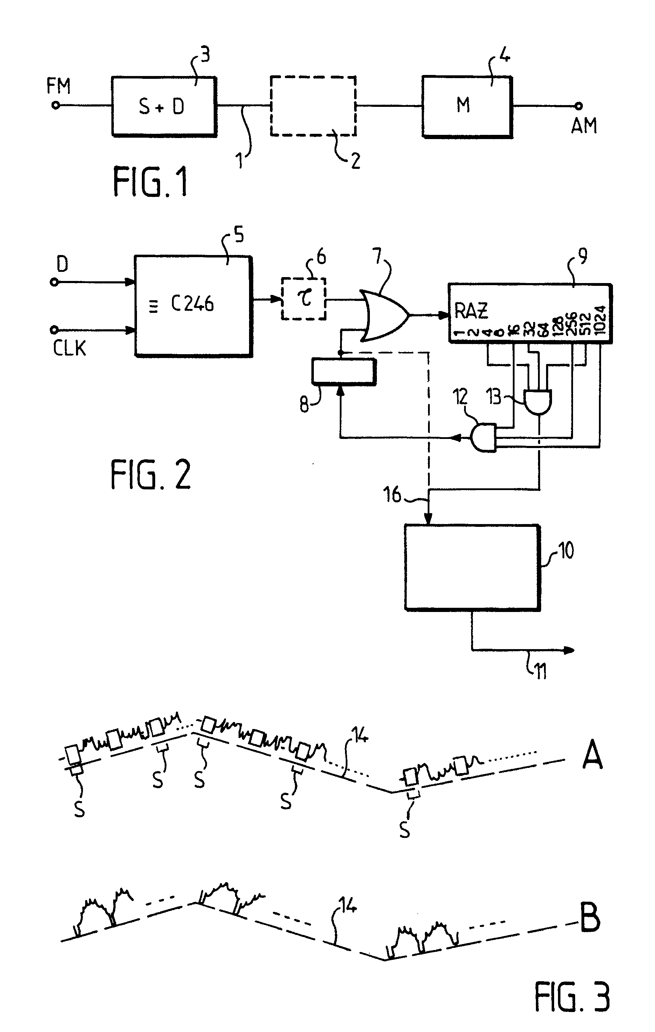

A l'entrée du système de la figure 1, qui fait partie d'une tête d'alimentation de réseaux cablés, sont amenés plusieurs signaux D2MAC-paquet modulés en fréquence, référencés FM. L'un de ces signaux est sélectionné puis démodulé dans un élément 3. Après démodulation, c'est à dire en bande de base, il est introduit dans l'élément 2 qui constitue l'objet de l'invention, et le signal sortant de cet élément est enfin amené à un modulateur 4, qui module une porteuse en amplitude (AM) pour être transmise par câble sur un réseau.

Avant la modulation en amplitude, il est nécessaire que le signal ait un niveau correct du point de vue de sa composante continue. Par contre, il n'est pas nécessaire qu'il soit décodé. Un but de la présente invention est de régler la composante continue du signal sortant de l'élément 3 par les moyens les plus simples possibles. Il s'agit notamment de débarasser le signal des composantes parasites basse-fréquence et surtout du signal de dispersion d'énergie à 25Hz.

Pour bien régler la composante continue, il faut engendrer une impulsion qui détermine une fenêtre temporelle dans laquelle le signal a une valeur bien déterminée. Une fenêtre possible a dans la norme D2-MAC/paquet une durée de 0,74 $\mu$S et est située après la salve duobinaire. Le signal présente alors une valeur qui est la valeur analogique du gris moyen de la luminance. La fenêtre peut aussi correspondre à la totalité de la période de signal numérique et le niveau continu est alors déterminé par la mesure des niveaux de crête du signal numérique, dont la demi-somme est égale à la valeur du gris mentionnée ci-dessus.On a alors un réglage dit "doux". Dans tous les cas, le signal déterminé dans la fenêtre est retranché au signal incident

Le signal D2-MAC/paquet comporte un mot numérique de synchronisation de trame qui est un mot $S_t$ de 64 bits présent dans la ligne 625. Ce mot est inversé une trame sur deux, devenant ainsi $\overline{S}_t$. Dans la base de temps selon l'invention, on détecte une partie aussi petite que possible du mot $S_t$, appelée $5_t^*$ et ceci une trame sur deux, c'est à dire qu'on néglige $\overline{S}_t$. Les essais qui ont été faits ont conduit à penser qu'un mot $S_t^*$ dont la longueur est comprise entre seize et vingt-quatre bits est suffisant.

Un tel mot est commode à manipuler, car il peut être contenu dans deux ou trois registres à décalage à huit bits très courants, par exemple de type F164. Il est alors intéressant que le mot ait une longueur multiple de huit bits, pour utiliser au mieux la capacité des registres.

A partir du positionnement temporel fourni par $S_t^*$, on engendre à l'aide d'un comptage une impulsion d'échantillonnage toutes les deux lignes. Le tableau suivant explique le mécanisme:

ligne 625 → $S_t^*$ détecté

ligne 2 → impulsion d'échantillonnage engendrée
ligne 4 → impulsion d'échantillonnage engendrée
ligne 6 → impulsion d'échan(illonnage engendrée
..........
ligne 624 → impulsion d'échantillonnage engendrée
ligne 625 → $\overline{S}_t^*$ n'est pas détecté
ligne 1 → impulsion d'échantillonnage engendrée
ligne 3 → impulsion d'échantillonnage engendrée
..........
ligne 623 → impulsion d'échantillonnage engendrée
ligne 625 → $S_t^*$ détecté à nouveau et remise à zéro du système

Le réglage "doux" est possible: il suffit que l'impulsion, toujours engendrée une ligne sur deux, ait une durée correspondant à celle des données duobinaires.

Sur la figure 2, le signal entrant D et l'horloge CLK sont fournis à un circuit 5 qui réalise une comparaison entre les 16 derniers bits reçus dans le signal entrant D, et un mot prédéterminé, contenu dans une mémoire morte. Ce mot est ici C246, exprimé en notation hexadécimale. Il s'agit simplement des 16 derniers bits du mot de synchronisation de trame tel que la norme D2-MAC/paquet le définit. Il peut se faire que ce mot soit présent par hasard, ailleurs que dans le mot de synchronisation de trame. Pour diminuer le risque que cette possibilité fait encourir, on peut aussi choisir un mot plus long, par exemple 41C246 qui représente les 24 derniers bits du mot de synchronsation de trame. Une coïncidence est donc détectée au moment précis où le dernier bit du mot de synchronisation de trame est reçu, c'est à dire pour le bit 100 de la ligne 625. Les définitions de nombres de bits ou de périodes d'horloge sont basées ici sur une horloge à 10,125 Mhz; il y a donc 648 périodes par ligne d'image, cependant que la salve numérique d'une ligne comprend 105 bits correspondant à une durée de 105 périodes d'horloge.

La sortie de l'élément 5 fournit un top à l'instant de coïncidence; ce top est retardé dans un circuit de retardement 6. Ce dernier est indiqué en pointillés, car dans une variante décrite plus loin pour un réglage "doux", il n'est plus utile. Le top traverse ensuite une porte OU 7 et parvient enfin à l'entrée de remise à zéro d'un circuit de comptage 9. Ce circuit est un compteur binaire à 11 étages; les sorties intermédiaires 16,256, 1024 sont reliées chcune à une entrée d'une porte ET 12. Cette dernière fournit donc à sa sortie une impulsion pour un chiffre de comptage de 1296. Cette impulsion est rebouclée, via un circuit de maintien (latch) 8, sur une deuxième entrée de la porte OU 7 pour déclencher la remise à zéro du circuit de comptage 9. Le circuit de maintien 8 sert seulement à allonger la durée du top à une valeur (≈100ns) qui permet un déclenchement sûr de la remise à zéro. Ainsi le circuit de comptage réalise un comptage modulo 1296, et par conséquent il fournit une impulsion toutes les deux lignes d'image.

Comme cela a été expliqué plus haut, le top à la sortie de l'élément 5 est fourni au moment de la période d'horloge 100 (par rapport au début d'une ligne). Or le début de la période d'alignement correspond à la période 105, soit 5 périodes plus tard: il suffit donc que le circuit de retardement 6 apporte un retard de 5 périodes, soit 5 bits, pour que le top à sa sortie corresponde au début de la période d'alignement. Le circuit de retardement peut être facilement réalisé au moyen d'un registre à décalage de 5 bits.

Le top à la sortie du circuit 8 est amené (par une connexion dessinée en pointillés, car elle aussi sera supprimée dans une variante destinée au réglage "doux", qui sera décrite plus loin) à un circuit 10 monté de façon à réaliser une fonction de monostable pour fournir une impulsion d'échantillonnage. La durée de cette impulsion est choisie de façon à correspondre à la période d'alignement. Cette dernière dure 0,74 $\mu$s; cela correspond à environ 7 périodes d'horloge, et la durée d'impulsion délivrée par le circuit 10 peut donc être de 7 périodes. Néanmoins, pour avoir une marge de sécurité, on choisit une impulsion un peu plus courte, par exemple 4 périodes.

Le circuit 10 est un compteur dont le début du comptage est déclenché par le top à la sortie du circuit 8. C'est ici un compteur binaire à deux étages qui s'arrête chaque fois qu'il arrive à zéro. Ce compteur fournit le signal d'échantillonnage pendant tout le temps ou il n'est pas arrêté. Il délivre donc sur sa sortie 11 une impulsion de quatre périodes d'horloge commençant à partir du susdit top à la sortie du circuit 8.

Lors de la détection de la coïncidence dans la ligne 625, le top issu de la porte 7 remet à zéro le compteur 9 juste un coup d'horloge avant qu'il n'arrive au compte 1296. De ce fait, la porte 12 ne "voit" pas ce compte et le circuit 10 ne fournit pas d'impulsion. Celle ci n'est donc jamais engendrée pendant la ligne 625, quand il n'en faut pas puisque le palier de référence n'existe pas dans cette ligne spéciale.

Bien entendu, il est possible de choisir un autre mot que C246 ou 41C246 pour le champ à reconnaitre, et même un mot de longueur différente (par exemple comprise entre 17 et 23 inclus). Chacun des autres mots contenus dans le mot de synchronisation de 64 bits peut convenir. Néanmoins, le choix du dernier d'entre eux offre l'avantage qu'il est situé le plus près du palier de référence de gris, et que donc la durée du retard à prévoir dans le circuit 6 est réduite. En outre les mots C246 ou 41C246 comportent une proportion de UN et de ZERO assez différente de celle d'une distribution aléatoire, ce qui rend moins probable leur apparition par hasard en dehors du mot de synchronisation.

La porte 13 dont le rôle sera expliqué plus loin n'est pas utilisée dans la variante décrite ci dessus.

Lorsque l'on désire utiliser un réglage "doux", le dispositif doit être légèrement différent. Il s'agit alors de fournir une impulsion d'échantillonnage pendant la période des données numériques. cette période dure 105 bits (6 bits pour le mot de synchronisation ligne, et 99 bits de données). Il est possible d'utiliser toute la durée de cette période ou seulement une partie. Le compteur 10 est alors un compteur d'au plus 105 bits. Toujours pour avoir une marge de sécurité, on choisit par exemple une durée de 100 bits. La période d'alignement, qui est donc la période de données duobinaires, commence maintenant avant la fin du mot de synchronisation de trame. Une solution consisterait à choisir pour le circuit de retardement 6 une durée de retardement qui amène au début de la ligne suivante. Néanmoins une telle durée est importante, et le registre à décalage correspondant serait d'une grande taille. Une solution plus intéressante consiste à utiliser d'autres sorties intermédiaires du circuit de comptage 9, pour détecter un chiffre de comptage déterminé. Alors le circuit de retardement 6 n'est plus nécessaire. Pour le réglage "doux" il faut un top qui se produise 547 bits après le top issu de l'élément 5 (pour tomber exactement au début de la période de données duobinaires). Pour simplifier, on peut chercher un chiffre qui ne comporte que deux bits UN en notation binaire. En choisissant les poids 64 + 512, on obtient le chiffre 576, qui est "trop grand" de 29 bits et conduit à la fourniture d'un top au moment du bit 30 des données numériques. Si l'on désire arriver plus près du début des données numériques, on peut exploiter trois sorties du circuit 9, en choisissant les poids 512 + 32 + 4, ce qui donne le chiffre 548, conduisant à la fourniture d'un top sur le bit 2 des données numériques. C'est cette solution qui est représentée sur la figure où une porte ET 13 commandée par les sorties de poids 4,32,512 du circuit de comptage 9 fournit un top à une entrée 16 du circuit 10, pour déclencher le début d'une impulsion d'échantillonnage. Bien entendu la connexion en pointillé entre les circuits 8 et 10 n'est pas utilisée dans cette variante.

Le circuit 10 est par exemple un compteur binaire à sept étages, remis à zéro et arrêté par la détection de ses propres bits 64 et 32 à UN ensemble, soit pour un comptage de 96. Ce compteur fournit un signal d'échantillonnage pendant tout le temps où il n'est pas arrêté.

Dans une variante, le compteur 10 pourrait être remplacé par une bascule R/S. Alors la porte 13 établirait un état de la bascule, et une autre porte ET (non représentée) rétablirait l'autre état au bout de cent périodes d'horloge. A cet effet ladite autre porte serait commandée par exemple à partir des sorties intermédiaires 512 + 128 + 8 du circuit de comptage 9.

Certains satellites émettent selon les heures des si gnaux répondant à une norme ou une autre. Par exemple, certains émettent de temps en temps en D2-MAC/paquet, et de temps en temps en PAL. Le dispositif de réglage de la composante continue basé sur l'observation de la salve duobinaire est intéressant dans ce cas car il se prête bien à la réalisation d'une base de temps multistandard. A cet effet, le dispositif d'échantillonnage proprement dit est alors un circuit de détection de la valeur minimale du signal. Un tel circuit est par exemple basé sur l'utilisation d'un élément déchargé rapidement à la valeur du signal et qui se charge ensuite plus lentement, de façon à suivre les variations à basse-fréquence du minimum du signal reçu. Lorsque ce dernier est un signal D2-MAC/paquet, le circuit de détection est activé seulement pendant les périodes de données numériques, au moyen de la susdite impulsion d'échantillonnage. Le signal en question est représenté sur la figure 3A, où 14 est une ligne indiquant la variation du minimum au cours du temps; ce minimum varie selon une dent de scie à 25 Hz à cause du signal de de dispersion d'énergie. Les références S indiquent les périodes d'échantillonnage. Lorsque par contre il s'agit d'un signal PAL (figure 3B), l'absence de détection d'un mot $S_t^*$ pendant un temps prédéterminé est interprétée comme voulant dire qu'il s'agit de PAL, et le système bascule dans un mode de fonctionnement avec détection en continu du minimum. Alors le circuit de détection du minimum prend en compte le fond des tops de synchronisation ligne. Le basculement vers le mode de fonctionnement avec détection en continu du minimum est géré par un microprocesseur qui vient lire l'état de $S_t^*$ dans un circuit de maintien (latch).)

## Revendications

1. Base de temps pour un système de télévision faisant usage d'un mot de synchronisation de trame numérique, des mots de synchronisation de trame différents étant utilisés pour les trames paires et pour les trames impaires, munie d'un dispositif de détection numérique du mot de synchronisation de trame, caractérisée en ce que ledit dispositif est muni de moyens pour reconnaître un mot de synchronisation de trame sur deux.

2. Base de temps de télévision selon la revendication 1, caractérisée en ce que lesdits moyens sont en outre basés sur la reconnaissance d'une partie seulement du mot de synchronisation de trame.

3. Base de temps de télévision selon la revendication 2, caractérisée en ce que les moyens pour reconnaître un mot de synchronisation de trame sont basés sur la reconnaissance d'un champ dont la longueur est comprise entre seize et vingt-quatre bits seulement dans le mot de synchronisation de trame.

4. Dispositif d'alignement associé à une base de temps de télévision selon l'une quelconque des revendications 1 à 3, caractérisé en ce qu'il est muni d'un circuit de comptage qui est remis à zéro en relation avec la détection d'un mot de trame et fournit des signaux de positionnement temporel calés de façon adaptée par rapport au début d'une ligne, qui sont amenés à un circuit générateur d'impulsion pour y déclencher une impulsion de durée déterminée destinée à l'échantillonnage d'une tension de référence pour le réglage de la composante continue, et en ce que ce circuit de comptage est agencé pour fournir un signal de positionnement toutes les deux lignes d'image.

5. Dispositif d'alignement selon la revendication 4, caractérisé en ce que lesdits signaux de positionnement temporel sont les propres signaux de remise à zéro du circuit de comptage.

6. Base de temps de télévision selon la revendication 5, caractérisée en ce qu'un circuit de retardement est inséré entre le dispositif de détection numérique et le circuit de comptage, et en ce que le susdit circuit générateur d'impulsion est agencé pour fournir une impulsion dont la longueur correspond à un nombre de périodes d'horloge compris entre trois et sept.

7. Dispositif d'alignement selon la revendication 6, prévu pour le système de télévision D2-MAC/paquet, caractérisé en ce que, les moyens pour reconnaître un mot de synchronisation de trame étant basés sur la reconnaissance d'un champ dont la longueur est de seize bits, ce dernier est le mot C246 (exprimé en notation hexadécimale) et en ce que le circuit de retardement apporte un retard de quatre à huit bits.

8. Dispositif d'alignement selon la revendication 6, prévu pour le système de télévision D2-MAC/paquet, caractérisé en ce que, les moyens pour reconnaître un mot de synchronisation de trame étant basés sur la reconnaissance d'un champ dont la longueur est de vingt-quatre bits, ce dernier est le mot 41C246 (exprimé en notation hexadécimale) et en ce que le circuit de retardement apporte un retard de quatre à huit bits.

9. Dispositif d'alignement selon la revendication 4, prévu pour le système de télévision D2-MAC/paquet, caractérisé en ce que ledit circuit générateur d'impulsion est agencé pour fournir une impulsion dont la longueur correspond à un nombre de périodes d'horloge de l'ordre d'une centaine, et inférieur à cent cinq.

10. Dispositif d'alignement selon la revendication 9, caractérisé en ce qu'il est muni de moyens pour détecter un chiffre de comptage particulier du circuit de comptage, et fournir alors le susdit signal de positionnement temporel.

11. Dispositif d'alignement selon l'une des revendication 9 ou 10, caractérisé en ce qu'il est muni d'un dispositif d'échantillonnage qui est un circuit de détection de la valeur minimale du signal, et de moyens pour activer ce dispositif par la susdite impulsion destinée à l'échantillonnage, lorsqu' un mot de synchronisation de trame a été détecté depuis un temps prédéterminé, et pour l'activer en permanence dans le cas contraire.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 282 106 (S.A. LA RADIOTECHNIQUE INDUSTRIELLE ET COMMERCIALE) * Colonne 3, ligne 55 - colonne 7, ligne 22 * | 1,4,5 | H 04 N 11/08 |
| A | | 2 | |
| | --- | | |
| A | EP-A-0 167 430 (ETAT FRANCAIS) * Page 10, ligne 29 - page 11, ligne 32 * | | |
| | ----- | | |

**DOMAINES TECHNIQUES RECHERCHES (Int. Cl.5)**

H 04 N

Le présent rapport a été établi pour toutes les revendications

| Lieu de la recherche | Date d'achèvement de la recherche | Examinateur |
|---|---|---|
| LA HAYE | 08-06-1990 | VERSCHELDEN J. |